# EUROPEAN PATENT APPLICATION

(11) **EP 2 746 999 A1**
(43) Date of publication of application: **25.06.2014**
(21) Application number: 12290447.7
(22) Date of filing: 19.12.2012
(51) Int. Cl.: G06Q 10/02, G06Q 50/14, G06Q 20/12, G06Q 20/04

(54) **Secured payment travel reservation system**

(71) Applicant: Amadeus S.A.S., 06410 Biot (FR)
(72) Inventor: Florimond, Cedric, 06220 Vallauris (FR); Orlinski, Anael, 06220 Golfe Juan (FR); Zente, Jean-Sebastien, 06902 Sophia Antipolis Cedex (FR); Boudia, Linda, 06600 Antibes (FR); Durrmann, Patrick, 06600 Antibes (FR)
(74) Representative: Samson & Partner

(57) **Abstract**

Methods, systems, and computer program products for securely paying for a travel booking. A travel booking may be generated at a reservation system based on booking data received from a reservation device for a customer. Issuance of a ticket for the travel booking may be held pending a confirmation of payment from a payment processor. A customer device of the customer may be interfaced with the payment processor via the reservation system to authenticate payment information for paying for the travel booking, and a payment confirmation may communicated to the reservation system. The ticket may be issued by the travel reservation system responsive to receiving the payment confirmation.

## Description

The invention is generally related to computers and computer software, and in particular to methods, systems, and computer program products for securely paying for a travel booking.

### Background of the Invention

In some conventional travel reservation systems payment information is provided in a manner such that the payment information cannot be authenticated. For example, a travel customer may communicate with a travel agent using telephone communication, and the travel customer may provide the travel agent payment information verbally. In this example, the travel agent enters the payment information at a reservation device, such as a computer, and the payment information is not verified/authenticated. As another example, if a travel customer books travel with a travel agent in person, unless the travel agency is equipped with electronic payment capture devices (i.e., credit card readers, etc.), the payment information (e.g., a credit card number) may still be fraudulent. As such, for these conventional payment channels for travel reservations, the payments submitted through such channels may be considered unsecure.

In general, unsecured payments increase costs for travel merchants (e.g., airlines, rail travel providers, hotels, etc.), travel booking systems (e.g., global distribution systems), and/or third party reservation services (e.g., travel agencies), as liability for fraudulent payments through unsecured payment channels typically remains with the travel merchant, travel booking system, and/or third party reservation service. In addition, because the travel merchant, booking system, and/or third party reservation service handle the payment information for such unsecured payment channels, the travel merchant, booking system, and/or third party reservation service may be required to comply with various security standards for sensitive payment information. For example, the travel merchant, booking system, and/or third party reservation service may be required to comply with the Payment Card Industry Data Security Standard (PCI DSS), which is an information security standard for organizations that handle cardholder information for many debit, credit, prepaid, e-purse, ATM, and POS payment cards. Complying with such standards typically increases costs associated with processing payments for travel reservations.

Moreover, many travel merchants and reservation systems utilize a travel agency selling model, i.e., travel agencies distribute a travel merchant's products on behalf of the travel merchant. However, the travel merchant generally is liable for the payment, even in the case of fraudulent payments. Therefore, in conventional systems utilizing the travel agency selling model, travel merchants are generally dependent on travel agency procedures to secure payments.

Consequently, a significant need exists in the art for improved payment systems for travel bookings, as well as methods and computer program products, for securely paying for a travel booking.

### Summary of the Invention

Embodiments of the invention generally comprise a method, system, and computer program product for paying for a travel booking. Booking data generated at a reservation device for a customer is received at a reservation system, and the travel booking is generated for the customer based on the booking data. A request for a payment confirmation is sent from the reservation system to a payment processor. The payment confirmation is received from the payment processor at the reservation system, where the payment confirmation indicates that payment is secured for the travel booking. A ticket for the travel booking is issued responsive to receiving the payment confirmation at the reservation service. As such, by issuing the ticket for the travel booking after the payment confirmation is received, the payment for the travel booking may be considered a secured payment.

### Brief Description of the Drawings

The accompanying drawings, which are incorporated in and constitute a part of this specification, illustrate various embodiments of the invention and, together with a general description of the invention given above and the detailed description of the embodiments given below, serve to explain the embodiments of the invention.
FIG. 1 is a block diagram of a reservation system, reservation device, customer device, one or more payment processors, and one or more travel merchants in communication consistent with embodiments of the invention.
FIG. 2 is a block diagram of the reservation and payment system of FIG. 1.
FIG. 3 is a block diagram of the reservation device of FIG. 1.
FIG. 4 is a block diagram of the customer device of FIG. 1.
FIG. 5 is a flowchart illustrating a sequence of operations that may be performed by the reservation and payment system of FIGS. 1 and 2 to reserve a travel booking, issue a ticket for the reserved travel booking, and cause a payment to be captured for such reserved travel booking.
FIG. 6 is a flowchart illustrating a sequence of operations that may be performed by the reservation and payment system of FIGS. 1 and 2 to authenticate payment information provided for a reserved travel booking and reserve a payment based on the authenticated payment information.
FIG. 7 is a flowchart illustrating a sequence of operations that may be performed by the reservation and payment system of FIGS. 1 and 2 to cancel a reserved travel booking.
FIGS. 8A-D are an example routine in the form of a sequence diagram that may be performed by the reservation system, reservation device, customer device, one or more payment processors, and one or more travel merchants shown in FIG. 1 as a procedure to facilitate secure payment for a travel booking.

### Detailed Description

Embodiments of the invention reserve a travel booking for a given time limit, authenticate payment information for the reserved travel booking, and approve a payment based on the authenticated payment information prior to issuing a travel ticket for the reserved travel booking. According to these embodiments of the invention, a reservation system receives booking data from a reservation device (e.g., a computing device utilized by a travel agency to book travel reservations) to make travel reservations for a travel customer. The reservation system reserves the travel booking according to the booking data, where the reserved travel booking includes an associated time expiration limit.

The reservation system holds issuance of a ticket for the travel booking until payment information is authenticated and a payment based on the authenticated payment information is approved with a payment processor (e.g., a bank, credit/debit card issuer, PayPal, etc. Approval of a payment generally indicates that a payment authorization has been validated by the payment processor, where such approval indicates that a corresponding amount is blocked/reserved for use in an account corresponding to the payment information. For example, if the payment information indicates a credit card, the payment processor (i.e., the credit card issuer) may approve a payment based on the payment information such that an amount corresponding to the payment is blocked from other use. Approval by the payment processor may include one or more verification checks of the payment information including for example, an account holder name check, billing address check, etc. After approving the payment at the payment processor, the payment processor may communicate a payment confirmation to the reservation system, where the payment confirmation may include an approval code that indicates that the payment has been approved.

To authenticate and approve payment for the reserved travel booking, the reservation system, a customer device of the travel customer, and a payment processor may communicate therebetween such that payment information provided by the travel customer with the customer device may be authenticated with the payment processor prior to issuing a ticket for the reserved travel booking. If the payment information is successfully authenticated at the payment processor, a payment based on the authenticated payment information may be approved by the payment processor. The reservation system may receive a payment confirmation from the payment processor indicating that the payment information was successfully authenticated and that the payment has been approved for the reserved travel booking, and the reservation system may issue a ticket for the travel booking responsive to receiving the payment confirmation.

As such, by holding issuance of the ticket for the travel booking, the reservation system may guarantee travel services of the travel booking while waiting for confirmation that a valid payment has been approved for the travel booking through the payment processor prior to issuing the ticket for the travel booking. Therefore, in these embodiments, a payment based on payment information authenticated with the payment processor for the travel booking may be considered a secured payment since input payment information is authenticated and approved through the payment processor. Hence, reservation servers consistent with embodiments of the invention shift payment liability to payment processors because the payment information is provided by the travel customer using the customer device, and the payment processors authenticate the payment information and approve a payment based on the authenticated payment information.

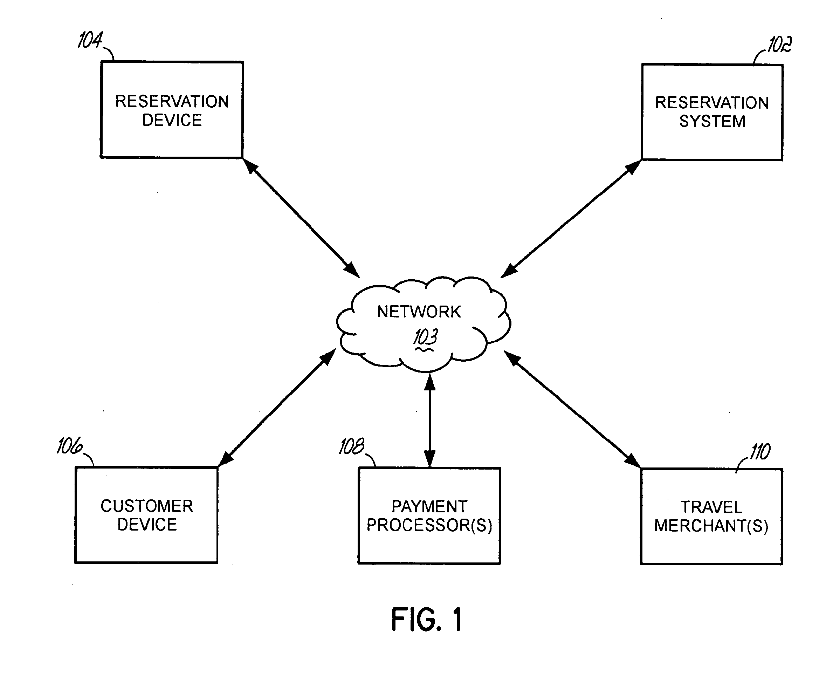

Turning now to the figures and particularly to FIG. 1, this figure provides a block diagram illustrating the one or more devices and/or systems consistent with embodiments of the invention. As shown in FIG. 1, a reservation system 102 may be implemented as one or more servers. The reservation system 102 may be connected to a communication network 103, where the communication network 103 may comprise the Internet, a local area network (LAN), a wide area network (WAN), a cellular voice/data network, one or more high speed bus connections, and/or other such types of communication networks. A reservation device 104 may be connected to the communication network 103, such that a travel agency or other such travel reservation service may communicate booking data and/or other such relevant data to the reservation system 102. The reservation device 104 may be a personal computing device, tablet computer, thin client terminal, smart phone and/or other such computing device.

A customer device 106, such as a smart phone, laptop computer, tablet computer, personal computer, and/or other such computing devices may be connected to the communication network 103. The customer device 106 may be utilized by a customer to review a reserved travel booking and provide and authenticate payment information for the reserved travel booking. One or more servers for one or more payment processors 108 (hereinafter payment processor 108) may be connected to the communication network 103. Payment processors include for example, a credit/debit card issuer, a bank, PayPal, etc., and the one or more servers for each payment processor generally facilitate remote communication therewith to authenticate and/or authorize a payment. As shown, one or more servers for one or more travel merchants 110 (hereinafter travel merchant 110) may be connected to the communication network 103. Travel merchants generally comprise travel agents, airlines, rail travel providers, hotels, and/or other such merchants that offer travel or travel-related services to customers using customer devices 106. The one or more servers of the travel merchants 110 generally facilitate remote communication therewith to reserve travel or travel-related service from a particular travel merchant.

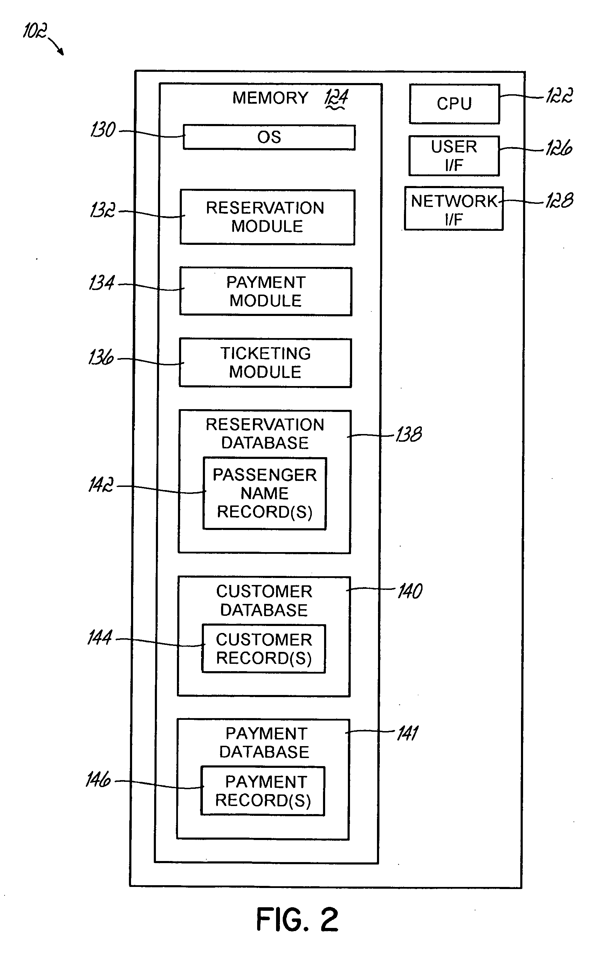

FIG. 2 provides a block diagram that illustrates the components of the one or more servers of the reservation system 102. The reservation system 102 includes at least one processor 122 including at least one hardware-based microprocessor and a memory 124 coupled to the at least one processor 122. The memory 124 may represent the random access memory (RAM) devices comprising the main storage of reservation system 102, as well as any supplemental levels of memory, e.g., cache memories, non-volatile or backup memories (e.g., programmable or flash memories), read-only memories, etc. In addition, memory 124 may be considered to include memory storage physically located elsewhere in the travel and reservation system 102, e.g., any cache memory in a microprocessor, as well as any storage capacity used as a virtual memory, e.g., as stored on a mass storage device or on another computer coupled to the travel and reservation system 102.

For interface with a user or operator, the reservation system 102 may include a user interface 126 incorporating one or more user input/output devices, e.g., a keyboard, a pointing device, a display, a printer, etc. Otherwise, input may be received via another computer or terminal (e.g., the reservation device 104, the customer device 106, the payment processor 108, and/or the travel merchant 110) over a network interface 128 coupled to the communication network 103. The reservation system 102 also may be in communication with one or more mass storage devices, which may be, for example, internal hard disk storage devices, external hard disk storage devices, external databases, storage area network devices, etc.

The reservation system 102 typically operates under the control of an operating system 130 and executes or otherwise relies upon various computer software applications, components, programs, objects, modules, data structures, etc., including for example, a reservation module 132, a payment module 134, and a ticketing module 136. In general, the reservation module 132 may be configured to generate a reserved travel booking based on received booking data. The payment module 134 may be configured to interface with the reservation device 104, the customer device 106, a particular payment processor 108, and one or more travel merchants to process a payment for a reserved travel booking. The ticketing module 136 may be generally configured to issue a travel ticket for a reserved travel booking. Moreover, various applications, components, programs, objects, modules, etc. may also execute on one or more processors in another computer coupled to the reservation system 102 via the communication network 103, e.g., in a distributed or client-server computing environment, whereby the processing required to implement the functions of a computer program may be allocated to multiple computers over a network. For example, some of the functionality described herein as being incorporated into a travel and reservation system 102 may be implemented in one or more servers.

The memory 124 of the travel and reservation system 102 may generally store one or more databases including, for example, a reservation database 138, a customer database 140, and/or a payment database 141. The databases 138, 140, 141 may contain data and supporting data structures that store and organize the data. In particular, the databases 138, 140, may be arranged with any database organization and/or structure including, but not limited to, a relational database, a hierarchical database, a network database, and/or combinations thereof. A database management system in the form of a computer software application executing as instructions on a processing unit of the reservation system 102 is used to access the information or data stored in records of the databases 138, 140, 141 in response to a query.

The reservation database 138 may store one or more passenger name records (PNR) 142, where each passenger name record 142 corresponds to a travel reservation for a passenger, including for example, the name of the passenger, the itinerary for the passenger, contact information for a travel agent or travel merchant associated with the travel reservation, ticketing information for the travel reservation, payment information, personal information for the passenger, contact information for the passenger, and/or other such information. In general, the reservation system 102 may generate a passenger name record 142 based on received booking data for a travel customer, store the passenger name record 142 in the reservation database 138, and communicate the passenger name record 142 to one or more travel merchants 110 when a travel reservation is made for a travel customer.

The customer database 140 may store one or more customer records 144, where each customer record 144 corresponds to a travel customer. In general, a customer record 144 may correspond to a travel customer that has created an account to store information associated with the travel customer to facilitate booking travel reservations more efficiently. For example, a customer record 144 may store contact information for the travel customer (e.g., an email address, mobile telephone number, etc.), payment information for the travel customer, information included in a passenger name record 142, and/or other such information. In addition, the customer record 144 may store a user name and password corresponding to the travel customer, such that the travel customer may log-in to the account corresponding to the customer record and utilize the information stored therein when providing information for booking of a travel reservation and providing payment information for the travel reservation. Consistent with embodiments of the invention, the customer record 144 may store information indicating a method of communication to be utilized to communicate a payment request to the travel customer. For example, the customer record 144 may indicate that the travel customer prefers a text message sent to a mobile telephone number stored in the customer record. In another example, an account corresponding to a particular customer record 144 may be logged into by the corresponding travel customer such that the travel customer may review reserved travel bookings associated with the travel customer and provide payment information for such reserved travel bookings.

Consistent with embodiments of the invention, the reservation system 102 may access and analyze a customer record 144 corresponding to a travel customer to identify a customer device to interface therewith for receiving payment information and authentication information. In addition, the reservation system 102 may access and analyze a customer record 144 corresponding to a travel customer to determine information associated with the travel customer, including for example, a particular payment processor utilized by the customer, billing information associated with the customer, contact information associated with the customer, etc.

The payment database 141 may store one or more payment records 146, where each payment record 146 corresponds to a customer payment for a travel booking. In general, a payment record 146 stores data that tracks a status of processing steps performed for each payment for a travel booking (i.e., fraud checks, authorization, capture, refund, etc.) and information corresponding to the payment (e.g., method of payment, customer information, transaction data for a payment processor 108, purchase information, a PNR reference, ticket information, etc.). Consistent with embodiments of the invention, each payment record 146 may store information that meets payment industry standards for proving a secure level of payment. Particularly, each payment record 146 may store data required to prove that liability for the payment is held by the payment processor and not travel merchant(s) 110 or operator of the reservation system 102. Payment records 146 may be accessible by travel merchants 110 through a GUI interface for payment disputes and/or fraudulent payment disputes. The payment database 141 may be PCI/DSS certified.

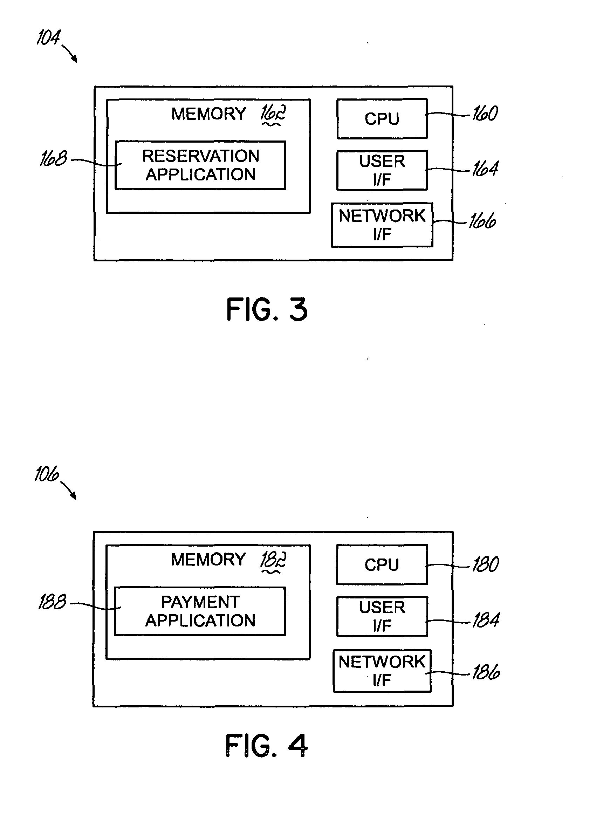

FIG. 3 provides a block diagram that illustrates the components of the reservation device 104 consistent with embodiments of the invention. The reservation device 104 includes at least one processor 160 including at least one hardware-based microprocessor and a memory 162 coupled to the at least one processor 160. The memory 162 may represent the random access memory (RAM) devices comprising the main storage of the reservation device 104, as well as any supplemental levels of memory, e.g., cache memories, non-volatile or backup memories (e.g., programmable or flash memories), read-only memories, etc. In addition, memory 162 may be considered to include memory storage physically located elsewhere in the reservation device, e.g., any cache memory in a microprocessor, as well as any storage capacity used as a virtual memory, e.g., as stored on a mass storage device or on another computer coupled to the reservation device 104. As described above with respect to the reservation system 102 of FIG. 2, the reservation device 104 may include a user interface 164 for interface with a user or operator (e.g., a travel agent) and a network interface 166 for communication over the communication network 103.

The reservation device 104 typically operates under the control of an operating system and/or application and executes or otherwise relies upon various computer software applications, components, programs, objects, modules, data structures, etc., including for example, a reservation application 168. The reservation application 168 may be executed by the processor 160 of the reservation device 104 to interface with an operator (e.g., a travel agent) via the user interface 164 such that booking data may be input for reserving a travel booking. The reservation application 168 may cause the input booking data to be communicated to the reservation system 102 such that a travel booking may be reserved based on the booking data. As such, in general, the reservation application 168 executes on the reservation device 104 to generate a front end through which a travel agent may interface with the reservation system 102 to reserve a travel booking for a travel customer. For example, the reservation device 104 executing the reservation application 168 may operate as a remote terminal connected to reservation system 102, and a travel agent may reserve a travel booking for a travel customer by interfacing with the reservation system 102 using the reservation device 104. For example, the reservation device 104 executing the reservation application 168 may provide a command-line interface to a global distribution system (GDS) embodied by the reservation system 102. In this example, the booking data communicated by the reservation device 104 may be in a travel agency format, such as command-line.

FIG. 4 provides a block diagram that illustrates the components of the customer device 106 consistent with embodiments of the invention. The customer device 106 includes at least one processor 180 including at least one hardware-based microprocessor and a memory 182 coupled to the at least one processor 180. The memory 182 may represent the random access memory (RAM) devices comprising the main storage of the customer device 106, as well as any supplemental levels of memory, e.g., cache memories, non-volatile or backup memories (e.g., programmable or flash memories), read-only memories, etc. In addition, memory 182 may be considered to include memory storage physically located elsewhere in the reservation device, e.g., any cache memory in a microprocessor, as well as any storage capacity used as a virtual memory, e.g., as stored on a mass storage device or on another computer coupled to the customer device 106.

As described above with respect to the reservation system 102 of FIG. 2, the customer device 106 may include a user interface 184 for interface with a user or operator (e.g., a travel customer) and a network interface 186 for communication over the communication network 103. The customer device 106 typically operates under the control of an operating system and/or application and executes or otherwise relies upon various computer software applications, components, programs, objects, modules, data structures, etc., including for example, a payment application 188. The payment application 188 may be executed by the processor 180 to cause the customer device to communicate with the reservation system 102 and/or the payment processor 108 to provide and authenticate payment information. In some embodiments, the payment application 188 may comprise an Internet browser that may be directed to an Internet address associated with a web interface for the payment processor 108 such that the travel customer may interface with the payment processor 108 over the communication network 103 via the web interface. In some embodiments, the payment application may be configured to generate an interface on the customer device 106 that is configured to communicate data between the reservation system 102 and/or the payment processor 108 to facilitate the input of payment information, authentication of the payment information, and authorization of a payment with the authenticated payment information.

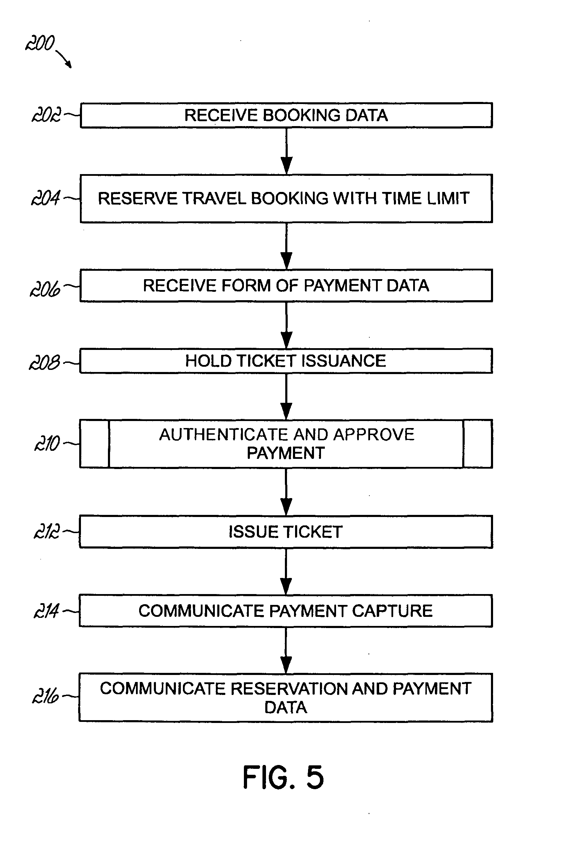

FIG. 5 provides a flowchart 200 that illustrates a sequence of operations that may be performed by the reservation system 102 to reserve a travel booking with a secured payment for the reserved travel booking. The reservation system 102 receives booking data corresponding to a travel request for a travel customer (block 202). In general, the booking data is communicated to the reservation system 102 from the reservation device 104. The reservation system 102 reserves a travel booking based on the received booking data for the travel customer, and the reservation system 102 associates a time limit with the reserved travel booking (block 204). Reserving the travel booking generally includes generating a passenger name record 142 for the reserved travel booking including information associated with the travel customer and travel information.

The reservation system 102 receives form of payment data (block 206), where the form of payment data generally indicates an address and type of communication to which a payment request is to be sent such that the form of payment data identifies a customer device associated with the travel customer. For example, the form of payment data may include an email address for the travel customer to which the payment request is to be transmitted. Similarly, the form of payment data may include a mobile telephone number to which the payment request is to be transmitted as a text message. The form of payment for the travel customer may be input at the reservation device 104 and communicated from the reservation device 104 to the reservation system 102. The input of form of payment information may be performed manually by a travel agent operating the reservation device 104, or form of payment information may identify a customer record 144 associated with the travel customer, and the reservation system may identify the customer device 106 by accessing and analyzing information of the customer record 144 stored in the customer database 140.

The reservation system 102 holds ticket issuance for the travel reservation (block 208) pending authentication of payment information and approval of a payment based on the authenticated payment information for the reserved travel booking. Therefore, the reservation system 102 may cope with any method of payment and the necessary time for authentication and approval. For example, a credit card payment may be authenticated and approved in a matter of minutes, and a bank transfer payment may be authenticated and approved in a matter of days. The holding of ticket issuance is maintained until authentication and approval occur. The reservation system 102 may generate at this step, via the payment module 134, a payment record 146 in the payment database 141 based at least in part on travel booking and/or the form of payment data, where a status stored in the payment record 146 indicates that the payment is "pending payment approval." To authenticate and approve the payment, the reservation system 102 communicates with the customer device 106 and a particular payment processor 108 identified in payment information received from the customer device 106 (block 210). Following authentication and approval of the payment for the reserved travel booking, the corresponding payment record 146 may be updated with data returned by the payment processor 108, and the stored status may be changed to "approved." The reservation system 102 then issues a ticket for the reserved travel booking (block 212). The reservation system 102 retrieves necessary payment information from the payment record 146 and communicates a payment capture instruction to the particular payment processor (block 214). The reservation system 102 retrieves necessary information from the passenger name record 142 and/or the payment record 146 and communicates data including the reserved travel booking and payment data to one or more travel merchants 110 associated with the reserved travel booking (i.e., providing travel services for the reserved travel booking) (block 216). The payment data may include information that merchant may use to prove the liability shift of the payment in case of fraud (e.g., VISA 3D Secure).

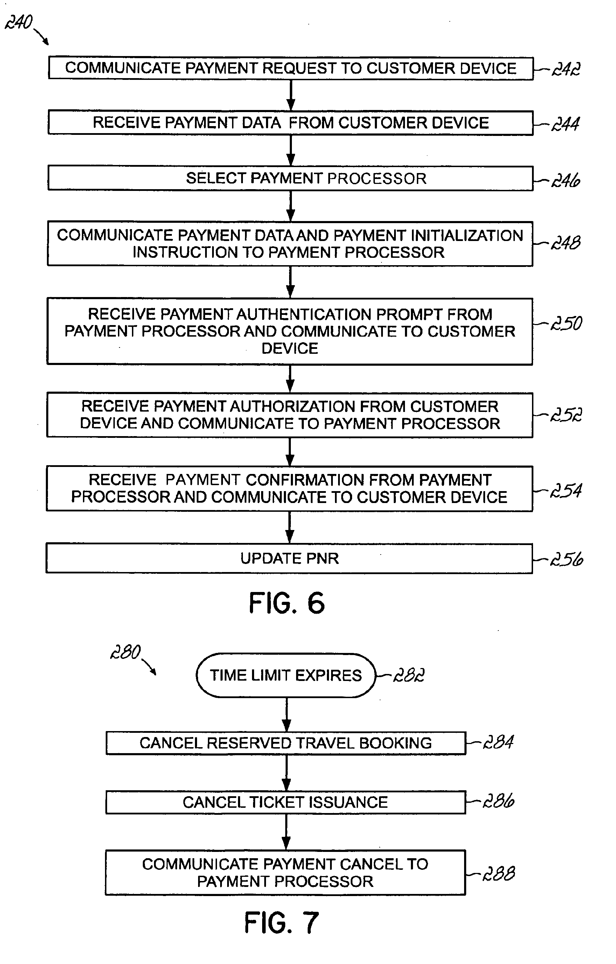

FIG. 6 provides a flowchart illustrating a sequence of operations that may be performed by the reservation system 102 to reserve and authenticate the payment for the reserved travel booking. The reservation system 102 communicates a payment request to the customer device 106 of the travel customer (block 242). The payment request may include data associated with the reserved travel booking, including for example the passenger name, origin and destination, etc. Moreover, communication of the payment request may be performed by sending an email to an email address for the travel customer, sending a text message to a mobile telephone number for the travel customer, communicating data to a payment application executing on the customer device 106, and/or other such forms of communicating data.

The reservation system 102 receives payment information data from the customer device 106 (block 244), and based on the received payment information, the reservation system 102 selects a particular payment processor 108. For example, the received payment information data may include a credit card type and credit card number, and the reservation system 102 may select a payment processor 108 corresponding to the credit card type. As another example, the received payment information may indicate an Internet-based payment system, such as PayPal, and the reservation system 102 may select the Internet-based payment system.

The reservation system 102 communicates the payment data and a payment initialization request to the selected payment processor 108 (block 248), receives payment authentication prompt data from the payment processor 108, and communicates the payment authentication prompt data to the customer device 106 (block 250). The reservation system 102 receives payment authorization from the customer device 106 and communicates the authorization to the payment processor 108 (block 252). For example, if the customer device is executing a dedicated payment application, the customer may authorize a payment by selecting an option presented on a graphical user interface generated by the executing payment application. In another example, if the payment application is an Internet browser that is connected to the reservation system 102 and/or the payment processor 108 via a web interface, the customer may authorize payment by selecting an option presented on the graphical user interface generated by the web interface via the Internet browser.

The reservation system 102 receives a payment confirmation from the payment processor 108 indicating that a payment based on the payment information provided by the travel customer via the customer device 106 is approved for the reserved travel booking, and the reservation system 102 communicates the payment confirmation to the customer device 106 (block 254). In response to receiving the payment confirmation, the reservation system 102 updates the PNR for the reserved travel booking to indicate payment information for the reserved travel booking (block 256).

FIG. 7 provides a flowchart 280 that illustrates a sequence of operations that may be performed by the reservation system 102 responsive to the time limit expiring for a reserved travel booking. In general, the time limit associated with a reserved travel booking corresponds to a defined period of time after reserving the travel booking that the travel customer is granted to provide payment for the reserved travel booking. As such, if the travel customer fails to provide payment information, fails to provide authentication information to authenticate the payment information, or fails to authorize a payment based on the authenticated payment information, the reserved travel booking may be cancelled by the reservation system 102 at the expiration of the time limit. In response to the time limit of a reserved travel booking expiring (block 282), the reservation system 102 cancels the reserved travel booking (block 284). The reservation system 102 cancels the pending ticket issuance for the reserved travel booking (block 286). In some embodiments, if payment information is being authenticated for reservation of a payment with the payment processor 108, the reservation system 102 may communicate a payment cancellation to the payment processor 108 (block 288).

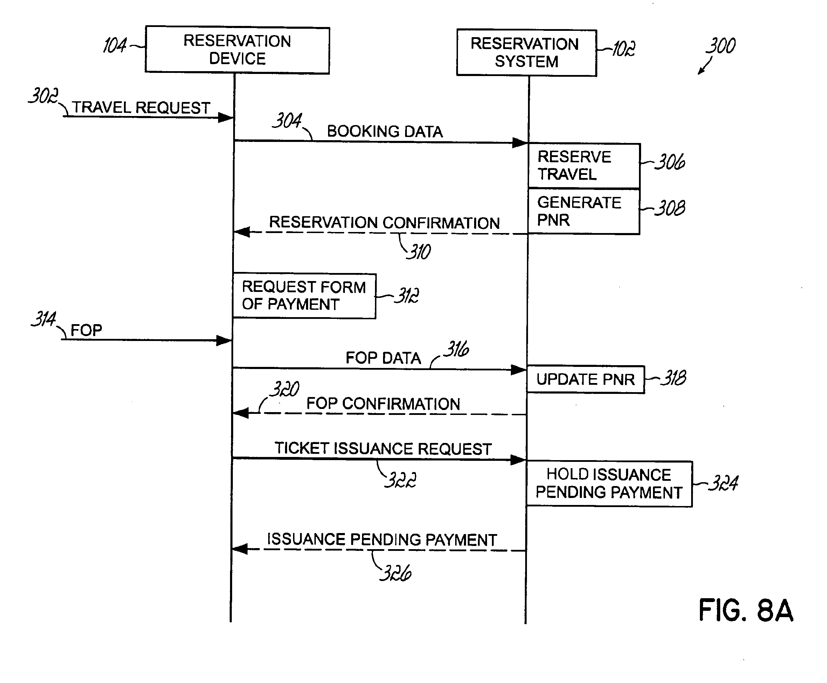

FIGS. 8A-D provide an exemplary routine that may be performed by the reservation system 102, the reservation device 104, the customer device 106, the payment processor 108, and/or the travel merchant 110 consistent with some embodiments of the invention to process a secure payment for a reserved travel booking. With reference to FIG. 8A, the reservation device 104 receives data for a travel request for a travel customer (block 302) from an operator/user, such as a travel agent. The reservation device 104 communicates booking data based on the received travel request data to the reservation system 102 (block 304). The reservation system 102 reserves a travel booking based on the received booking data (block 306), and the reservation system 102 generates a PNR based on the reserved travel booking (block 308). A reservation confirmation is communicated to the reservation device 104 from the reservation system 102 (block 310) indicating that a travel booking has been reserved for the travel customer. The reservation device 104 outputs data via the user interface 164 prompting the operator to provide form of payment information for the reserved travel booking (block 312). The reservation device 104 receives form of payment (FOP) information via the user interface 164 from the operator (block 314), and the reservation device 104 communicates data indicating the form of payment information to the reservation system 102 (block 316). In general, the form of payment information identifies a preferred type and channel of communication with a particular customer device 106 for the travel customer for receiving payment information and authenticating the payment information. For example, if the customer device 106 is a smart phone, the form of payment information may indicate a mobile telephone number corresponding to the smart phone and may further indicate that an SMS communication is preferred by the travel customer. In another example, the form of payment information may indicate a user name for an account associated with the travel customer, where the travel customer may log in to a dedicated application or web interface with the customer device 106 to access communications to the account. In this example, the account may correspond to a customer record 144 stored in the customer database 140.

The reservation system 102 updates the PNR for the reserved travel booking based on the received form of payment data (block 318), and communicates a confirmation to the reservation device 104 for the form of payment data (block 320). The reservation device 104 communicates a ticket issuance request to the reservation system 102 responsive to the received form of payment confirmation (block 322). The reservation system 102 holds issuance of the ticket for the request until payment has been authenticated and approved for the ticket (block 324), and the reservation system 102 communicates data to the reservation device 104 indicating that ticket issuance is being held (block 326).

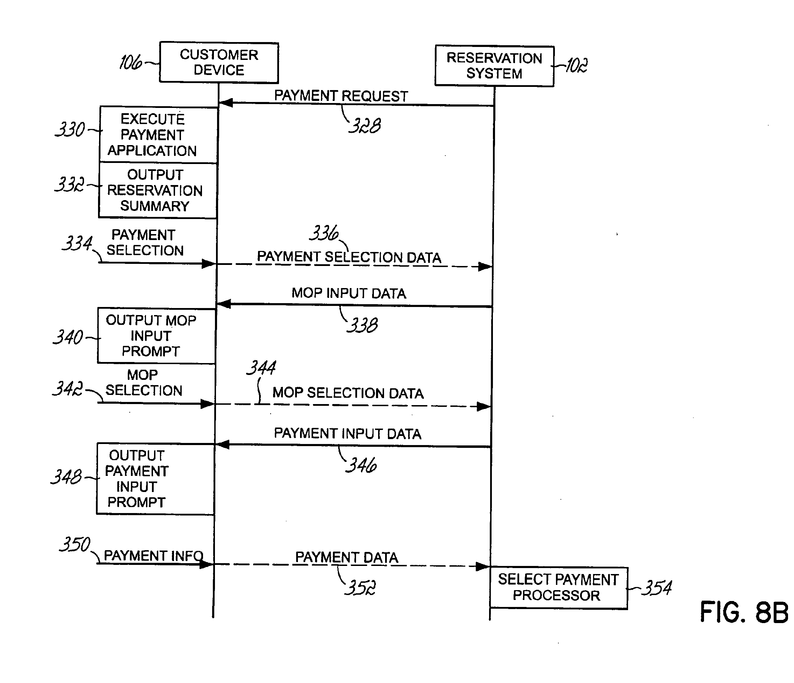

As shown in FIG. 8B, after holding issuance of the ticket, the reservation system 102 communicates a payment request to the customer device 106 for the reserved travel booking (block 328). The customer device 106 executes the payment application (block 330) and outputs data to the travel customer via the user interface 184 that indicates the reserved travel booking and prompts the travel customer to provide payment for the reserved travel booking (block 332). The customer device 106 receives a selection from the travel customer via the user interface 184 that selects an option to pay for the reserved travel booking (block 334), and the customer device 106 communicates payment selection data to the reservation system 102 (block 336).

The server represented by reservation system 102 communicates method of payment (MOP) input data to the customer device 106 (block 338). The customer device 106 outputs a method of payment input prompt via the user interface 184 (block 340) that prompts the travel customer to select a method of payment, such as a credit card, debit card, third party payment processor (e.g., PayPal, WePay, Google Checkout, etc.), bank account draft, etc. The customer device 106 receives a method of payment selection from the travel customer via the user interface 184 (block 342), and the customer device 106 communicates method of payment selection data to the reservation system 102 (block 344). The reservation system 102 communicates payment input data based on the method of payment selection data (block 346), and the customer device 106 outputs the payment input prompt data via the user interface 184 (block 348). The customer device 106 receives payment information from the travel customer via the user interface 184 (block 350). For example, the payment information may include a credit card type, credit card number, credit card expiration date, etc. In another example, the payment information may include an account identifier for a payment processor such as PayPal or a bank.

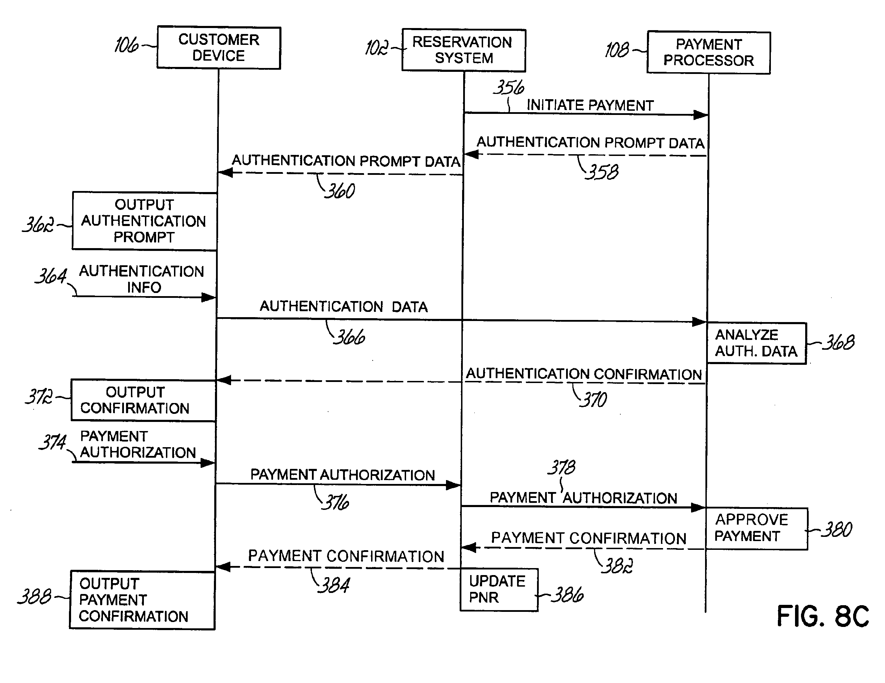

The customer device 106 communicates payment data including the payment information to the reservation system 102 (block 352), and the reservation system 102 selects a particular payment processor based on the received payment data (block 354). Referring now to FIG. 8C, the reservation system 102 communicates a request for payment initiation to the payment processor 108 indicated in the payment information (block 356), where the request for payment initiation includes the payment information received from the customer device 106.

The payment processor 108 communicates authentication prompt data to the reservation system 102 (block 358), and the reservation system 102 communicates the authentication prompt data to the customer device 106 (block 360). The customer device 106 outputs an authentication prompt to the travel customer via the user interface 184 such that the travel customer is prompted to provide authentication information corresponding to the provided payment information (block 362). The customer device 106 receives authentication information from the travel customer via the user interface 184 (block 364), and the customer device 106 communicates authentication data including the authentication information to the payment processor 108 (block 366). The authentication information generally corresponds to information that verifies the identity of the travel customer and/or the authenticity of the provided payment information. For example, the authentication information may include an identifier such as a user name, account number, etc. and a second factor such as a password, pin code, and/or other such type of information.

The payment processor 108 analyzes the authentication data (block 368) to determine whether the authentication data is correct, and therefore to determine whether the provided payment information is authentic (i.e., not fraudulent) (block 368). Responsive to the authentication data being valid, the payment processor 108 communicates an authentication confirmation to the customer device 106 (block 370), and the customer device 106 outputs a confirmation to the travel customer via the user interface 184 (block 372). The travel customer authorizes a payment using the authenticated payment information by interfacing with the customer device 106 via the user interface 184 (block 374). For example, the customer may select an option with the user interface to proceed with paying for the reserved travel booking.

The payment authorization is communicated from the customer device 106 to the reservation system 102 (block 376) and to the payment processor (block 378). The payment processor 108 approves a payment based on the authenticated payment information responsive to receiving the payment authorization (block 380), where the payment processor approves or declines the transaction based on the customer's available funds and/or the customer's available credit. The payment processor 108 communicates a confirmation to the reservation system 102 that indicates that a payment is approved for the reserved travel booking (block 382). The reservation system 102 communicates the confirmation to the customer device 106 (block 384). In addition, the reservation system 102 updates the PNR to indicate information for the reserved payment (block 386), and the user device outputs a payment confirmation via the user interface 184 for the travel customer (block 388).

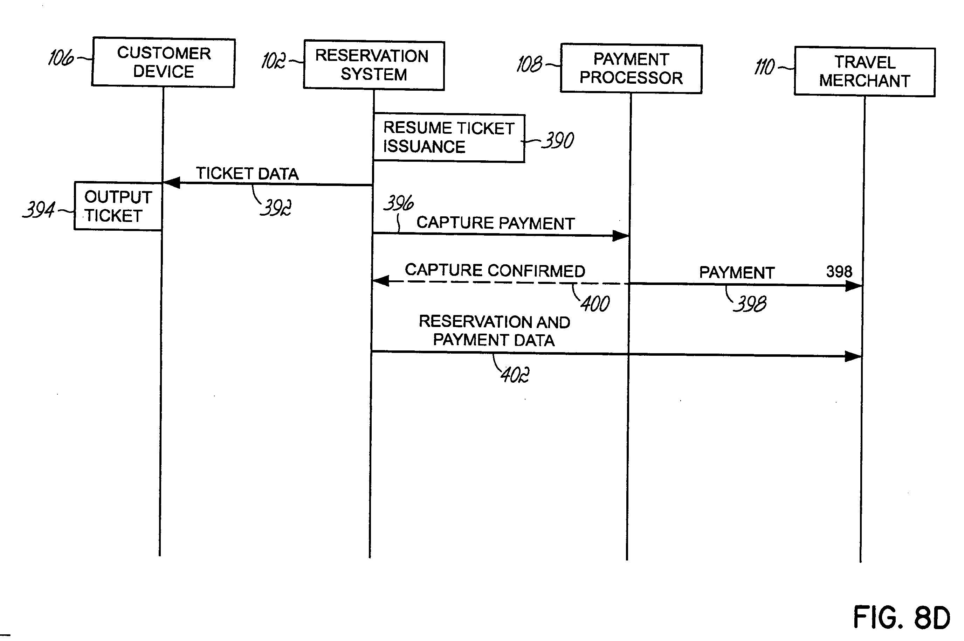

Referring now to Fig. 8D, after receiving the payment reservation confirmation from the payment processor 108, the reservation system 102 resumes ticket issuance for the reserved travel booking (block 390). The reservation system 102 communicates ticket data indicating an issued ticket for the reserved travel booking to the customer device 106 (block 392), and the ticket data may be output via the user interface 184 for the travel customer at the customer device 106 (block 394). After ticket issuance, settlement occurs. Specifically, the reservation system 102 communicates a capture payment instruction to the payment processor 108 to thereby cause the payment processor to capture the approved payment (block 396). The payment processor 108 transmits the captured payment for the transaction as funds to the bank account/collection account of the one or more travel merchants 110 providing travel services for the ticketed travel booking (block 398), and the payment processor 108 communicates a confirmation of the payment capture to the reservation system 102 (block 400). In response to receiving the confirmation of payment capture, the reservation system communicates reservation and payment data to the one or more travel merchants (block 402). The reservation and payment data communicated to the one or more travel merchants 110 may include the PNR corresponding to the reserved travel booking, information stored in a payment record 146 corresponding to the travel booking, and/or other such information.

As such, in the exemplary routine 300 illustrated in FIGS. 8A-D, ticket issuance for a reserved travel booking is held pending authentication of payment information and approval of a payment by a payment processor using the authenticated payment information for the reserved travel booking. In addition, the travel customer inputs payment information using the customer device 106, and the payment information is authenticated with the payment processor 108 such that fraudulent payment information may not be used to receive a ticket for a travel booking. The reservation system 102 communicates with the customer device 106 and the payment processor 108 to initialize authentication of the payment information between the customer device 106 and the payment processor 108.

Embodiments of the invention authenticate provided payment information with the payment processor 108 such that liability for fraudulent payment information is shifted from the provider of the reservation system 102 and/or travel merchants 110 to the payment processor 108. Since the reservation system 102 receives payment information from the customer device 106 and communicates the payment information to the payment processor 108, additional peripherals for processing some types of payment are not needed, such as electronic credit/debit card readers. Furthermore, because payment information may be provided by the customer device 106, an operator of the reservation device 104 (i.e., a travel agent) is not required to input payment information provided to the operator verbally.

In addition, authentication of the payment information with the payment processor 108 may include any type of authentication protocol utilized by the payment processor 108, as the reservation system 102 generally operates as an interface between the customer device 106 and the payment processor 108. For example, the payment processor 108 may utilize the 3-D secure protocol or other such authentication protocol to authenticate payment information. In this example, the customer device 106 may be re-directed to the payment processor 108 authentication interface through the interface provided by the reservation system 102, such that the travel customer may provide authentication information for the payment information from the customer device 106 to the payment processor 108.

Moreover, consistent with embodiments of the invention, a travel merchant may specify the methods of payment that may be accepted for payment. Therefore, the data communicated to the customer device 106 from the reservation system 102 executing the payment module 134 may limit the methods of payment that the travel customer may select at the customer device 106. Hence, in these embodiments of the invention, each travel merchant may control payment methods accepted for travel reservations generated via travel agencies.

As discussed herein, a ticket for a reserved travel booking may be held until a payment with authenticated payment information is reserved. The reservation system 102 may hold travel services associated with the reserved travel booking for a preset time limit (i.e., an expiration time), such that the reserved travel booking may guarantee availability of the travel services for the reserved travel booking. Therefore, while a ticket may not issued for the reserved travel booking before a payment is reserved with the payment processor 108 with authenticated payment information, the travel customer is guaranteed the reserved travel booking while the payment authentication and reservation operations are performed. In addition, the reserved payment is captured for the reserved travel booking in response to ticket issuance for the reserved travel booking such that a payment is not collected for a reserved travel booking for which a ticket could not be issued.

Moreover, embodiments of the invention may be configured to be compatible with many different types of customer devices. For example, a web-based interface may be provided from the reservation system 102 to types of customer devices 106 that include an Internet browser application. To initialize the web-based interface of this example, the reservation and payment system may communicate a data message (e.g., a text message, email, etc.) including a uniform resource locator (URL) that corresponds to an Internet location at which the customer device 106 may access the web-based interface of the reservation system 102. In this example, the web-based interface of the reservation system 102 may provide a secured connection to the payment processor 108 through the web-based interface, such that the travel customer may communicate payment information, authentication information, and/or authorization for a payment to the payment processor 108 by interfacing with the web-based interface executing on the reservation system 102 with the customer device 106.

Therefore, embodiments of the invention support secured payments for travel reservations made through conventional reservation channels that typically utilize unsecured payment channels. Embodiments of the invention also reduce required payment processing peripherals, including for example credit/debit card scanning devices, and embodiments of the invention may be utilized with different types of customer devices (e.g., a personal computer, tablet computer, smart phone, etc.) utilizing a web-based interface and/or a dedicated interface application. Furthermore, since payment information is not stored or processed with the reservation system 102, additional costs for security protocols and corresponding software and hardware tools associated with the secure storage and processing of sensitive payment information may be avoided.

The embodiments of the invention orchestrate the exchange of information among the client device, the merchant, the payment processor, and the reservation system. In particular, the actions of the reservation system and the payment processor are coordinated in accordance with the embodiments of the invention as the payment processor has access to the reservation system, and vice versa. Before the ticket is issued, the purchase price of the ticket is blocked with the payment processor as a promise by the customer to pay the purchase price. The blocking can relate to funds availability or credit availability contingent upon the type of payment processor. The ticket is issued only after the reservation system receives a payment confirmation from the payment processor. This capability, which eliminates the need for a card reader or voice authentication, permits an agent to enter data for the reservation in a command-line interface (e.g., using a cryptic interface) or other such interface that executes on reservation devices used by travel agents, and the customer to pay using a client device, such as a mobile telephone. This adds the transaction payment for the booking to the process flow and permits ticket issuance in a secure manner for operator of the reservation system. The burden of securing payment is shifted to the customer using the client device, who has to authenticate payment using his or her payment processor before the booking is ticketed. Payment is made from the payment processor to the merchant after ticket issuance.

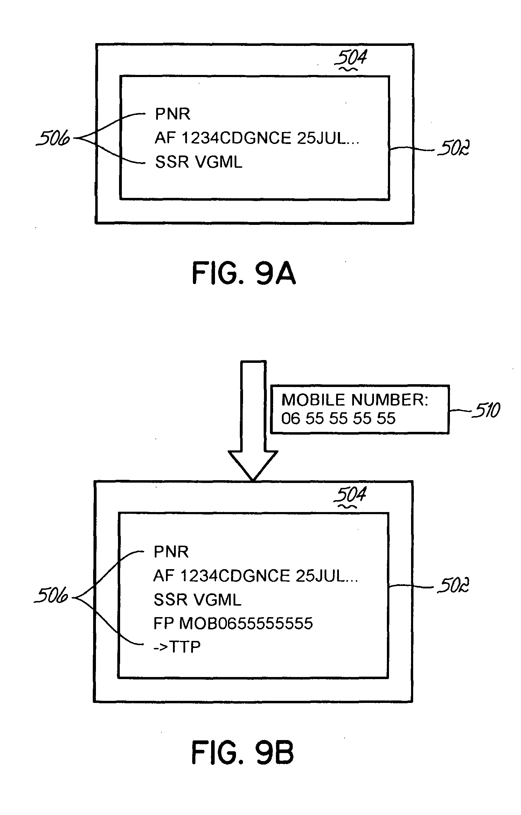

FIGS. 9A-9B provide a diagrammatic view of an example command-line interface 502 that may be output on a display 504 of the travel reservation device 104 for use by a travel agent. In general, the command-line interface 502 provides a mechanism for interacting with the executing reservation application 168, where the travel agent may issue commands to the executing reservation application 168 in the form of successive text lines 506. The travel agent may input travel request information through the command-line interface 506, and the travel reservation device 104 may generate booking data based on the input travel request information. Furthermore, the travel agent may input form of payment information through the command-line interface 502, and the travel reservation device 104 may generate form of payment data based on the input form of payment information.

Referring to FIG. 9A, the provided example illustrates the input of travel request information using the command-line interface 502, as described above with respect to block 302 of FIG. 8A. As shown, the travel agent has provided information for the travel request to the travel reservation device 104 via the command-line interface 502, including in this example, a flight information ('AF 1234CDGNCE 25JUL') along with a special service request for a vegetarian meal ('SSR VGML'). Turning to FIG. 9B and with reference to block 314 of FIG. 8A, the travel agent inputs a mobile telephone number 510 that may have been provided by the travel customer as form of payment information in a text line 506 ('FP MOB0655555555'). After inputting the mobile telephone number 510 in the text line 506, the agent requests ticket issuance through the command-line interface 502 by inputting print ticket command (`->TTP') in a text line 506 of the command-line interface 502.

The program code embodied in any of the applications described herein is capable of being individually or collectively distributed as a program product in a variety of different forms. In particular, the program code may be distributed using a computer readable media, which may include computer readable storage media and communication media. Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Communication media may embody computer readable instructions, data structures or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising."

While all of the present invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

## Claims

1. A method of paying for a travel booking, the method comprising:
receiving booking data at a reservation system from a reservation device;
generating the travel booking for a customer based on the booking data;
interfacing a customer device with a payment processor to authenticate payment information and approve a payment based on the authenticated payment information;
receiving a payment confirmation from the payment processor at the reservation system that indicates that the payment is approved for the travel booking; and
in response to receiving the payment confirmation from the payment processor, issuing a ticket for the travel booking.

2. The method of claim 1, wherein the travel booking comprises an expiration time, and issuing the ticket for the travel booking is based at least in part on whether the payment confirmation is received from the payment processor for the travel booking prior to an expiration time associated with the travel booking.

3. The method of any of the preceding claims, further comprising:
receiving form of payment data at the reservation system from the reservation device that identifies the customer device.

4. The method of claim 3, wherein the form of payment data identifies a customer record stored in a customer database associated with the customer, the method further comprising:
analyzing the customer record to identify the customer device.

5. The method of any of the preceding claims, further comprising:
prior to interfacing the customer device with the payment processor to authenticate payment information and approve a payment based on the authenticated payment information, receiving payment information at the reservation system from the customer device that identifies the payment processor.

6. The method of any of the preceding claims, further comprising:
in response to issuing the ticket for the travel booking, sending a payment capture request to the payment processor requesting that the approved payment for the travel booking be captured;
receiving a payment capture confirmation from the payment processor; and
in response to receiving the payment capture confirmation from the payment processor, communicating reservation data, booking data, and information corresponding to the payment for the travel booking stored in a payment record corresponding to the travel booking to one or more travel merchants associated with the travel booking.

7. The method of any of the preceding claims, further comprising:
in response to generating the travel booking for the customer based on the booking data, generating a payment record in a payment database,
wherein the payment record stores data indicating a status of a payment for the travel booking and information corresponding to the payment for the travel booking.

8. The method of claim 7, further comprising:
in response to receiving the payment confirmation from the payment processor, updating the payment record in the payment database to indicate that the status of the payment for the travel booking is approved.

9. The method of any of the preceding claims, further comprising:
holding issuance of the ticket for the travel booking until receiving payment confirmation indicating payment approval; and
communicating ticket data identifying the ticket to the customer device in response to issuing the ticket.

10. The method of any of the preceding claims, further comprising:
in response to generating the travel booking based on the booking data, sending a payment request for the travel booking to the customer device.

11. The method of any of the preceding claims, wherein the reservation device executes a command-line interface.

12. The method of any of the preceding claims, wherein the booking data is generated at the reservation device based at least in part on a reservation request input by a travel agent operating the reservation device.

13. A reservation system comprising:
a processor; and
program code configured to be executed by the processor to cause the processor to receive booking data at the reservation system from a reservation device, generate a travel booking for a customer based on the booking data, interface a customer device with a payment processor to authenticate payment information and approve a payment based on the authenticated payment information, receive a payment confirmation from the payment processor at the reservation system that indicates that the payment is approved for the travel booking, and issue a ticket for the travel booking responsive to receiving the payment confirmation from the payment processor.

14. The reservation system of claim 13, wherein the program code is further configured to receive form of payment data from the reservation device that identifies the customer device, and receive payment information from the customer device that identifies the payment processor prior to interfacing the customer device with the payment processor to authenticate payment information and approve the payment based on the authenticated payment information.

15. A program product comprising:
a computer readable storage medium; and
program code stored on the computer readable storage medium and configured upon execution to receive booking data for a customer at a reservation system from a reservation device, generate a travel booking for the customer based on the booking data, interface a customer device with a payment processor to authenticate payment information and approve a payment based on the authenticated payment information, receive a payment confirmation from the payment processor at the reservation system that indicates that payment is approved for the travel booking, and issue a ticket for the travel booking responsive to receiving the payment confirmation from the payment processor.
